# EUROPEAN PATENT SPECIFICATION

(11) **EP 1 483 184 B1**
(45) Date of publication and mention of the grant of the patent: **24.01.2007**
(21) Application number: 03702859.4
(22) Date of filing: 12.02.2003
(51) Int. Cl.: B65G 47/66, B31B 1/14, B31B 1/25, B31B 1/26

(54) **A MACHINE WITH A COUPLING MEMBER TO CONNECT TWO STATIONS WHICH PUNCH AND SLIT CORRUGATED CARDBOARD BLANKS AND THEN ERECT THEM**
MASCHINE MIT EINEM KUPPLUNGSGLIED ZUR VERBINDUNG ZWEIER STATIONEN, DIE WELLPAPPENZUSCHNITTE STANZEN UND SCHLITZEN UND SIE DANN AUFSTELLEN
MACHINE MUNI D'UN ELEMENT D'ACCOUPLEMENT POUVANT RACCORDER DEUX POSTES A PERFORER, COUPER ET ÉRIGER DES EBAUCHES EN CARTON ONDULE

(30) Priority: 13.02.2002 DK 200200216
(43) Date of publication of application: 08.12.2004
(73) Proprietor: Inter Ikea Systems B.V., 2616 Delft (NL)
(72) Inventor: RYDBERG, Tommy, S-566 32 Habo (SE); JÖRNBORN, Stefan, S-554 38 Jönköbing (SE)
(74) Representative: Noergaard, Tage
(86) International application number: PCT/IB2003/000485
(87) International publication number: WO 2003/068642

(56) References cited:
- EP-A- 0 761 574
- US-A- 2 536 961
- US-A- 5 857 395
- US-A- 6 138 819

## Description

### Technical Field

The invention relates to a machine for punching out and optionally slitting corrugated cardboard blanks from a web of corrugated cardboard while simultaneously applying folding lines onto said corrugated cardboard blanks, and where the machine includes two interacting punching tools, such as a plane punch provided with an upper and a lower tool or two interacting cylinders, where said punching, slitting and folding line tools are mounted on said two interacting cylinders.

### Background Art

Machines are known for punching out and/or slitting corrugated cardboard blanks from webs of corrugated cardboard. If desired, these machines can also apply folding lines onto the cardboard blanks. Typically, these machines are placed at cardboard mills producing for customers, such as factories, producing articles to be packed.

Furthermore, machines for erecting corrugated cardboard blanks are known, said machines providing the blanks with their permanent or semipermanent three-dimensional shape in such a manner that said blanks are ready to be filled. Typically, these machines are placed at article-producing factories where the final step of an article-producing process results in a completely packed article.

However, it is not an optimum solution to place the punching machines at one location, such as at a cardboard mill, and the folding machines at another location, such as at an article-producing factory, because a rather comprehensive logistics is involved in packing the corrugated cardboard blanks at the cardboard mill and carrying said blanks to the article-producing factory.

### Brief Description of the Invention

The object of the invention is to provide a machine of the above type which solves the above logistics problem and which at the same time is very reliable.

The machine according to the invention is characterised in that a delivery unit, such as a conveyor belt or a chute, is mounted immediately after the interacting upper and lower tools or the two interacting cylinders, and that said delivery unit is adapted to be connected to an erection module by means of a coupling member, said erection module erecting the plane corrugated cardboard blanks punched out and provided with folding lines into a permanent or semipermanent three-dimensional shape in which the resulting corrugated cardboard articles are ready to be filled with products. As a result logistic advantages are obtained as it is possible to completely avoid a packing and a sending of the corrugated cardboard blanks punched out to the product-producing factory. The coupling member has the effect that the punching out of the corrugated cardboard blanks is carried out adjacent the erection module and at the article-producing factory. Besides, the punching tools need not be manufactured at the same factory as the erection module.

The coupling member may according to the invention include a collecting compartment for a temporary collecting of the corrugated cardboard blanks arriving from the delivery unit, said collecting compartment for instance being shaped as an upwardly open box with lateral guide rails. As a result, a suitable buffer for corrugated cardboard blanks punched out is obtained in case the erection module cannot operate at the same speed as the punching tools.

Moreover, the coupling member may according to the invention include a transferring means optionally provided with a program controlling means, viz. a "communication means", and transferring one or more corrugated cardboard blanks at a time from the delivery unit of the collecting compartment to the feeding end of the erection module. As a result, the coupling member can, if necessary, transfer bundled corrugated cardboard blanks.

The transferring means of the coupling member may according to the invention be adapted to lift/grip/push and move corrugated cardboard blanks from the delivery unit or the collecting compartment to the feeding end of the erection module, where said corrugated cardboard blanks are released/left. The resulting transfer of the corrugated cardboard blank(s) to the feeding end of the erection module is particularly reliable.

In addition, the transferring means of the coupling member may according to the invention be provided with a gripping member for instance at a free end thereof, said gripping member for instance being in form of a suction cup. This embodiment turned out to be particularly reliable because then it is guaranteed that the transferring means does not leave a mark on the corrugated cardboard blank.

Furthermore, the transferring means of the coupling member may according to the invention be adapted to position the corrugated cardboard blank at a specific location in a desired manner in connection with the release of said corrugated cardboard blank at the feeding end of the erection module. In this manner it is ensured that the corrugated cardboard blank can be transferred to the erection module at any necessary desired angle.

Moreover, the collecting compartment of the coupling member may according to the invention form part of a level-controlling unit controlling the height of the stack of corrugated cardboard blanks temporarily placed in said collecting compartment. In this manner it is ensured that a limit applies to the number of punched out corrugated cardboard blanks stored and waiting in the collecting compartment. When too many corrugated cardboard blanks are waiting in the collecting compartment, the level-control unit can stop the punching tools temporarily.

Finally, the coupling member may according to the invention include coupling means, such as hook members, adapted to keep together the above delivery unit and the erection module as well as the guide rails, if any, optionally in a relatively tight relationship, said guide rails allowing the corrugated cardboard blanks delivered in or at the delivery unit to slide directly or almost directly into the feeding end of the erection module. As a result, the ready machine is relatively compact.

### Brief Description of the Drawings

The invention is explained in detail below with reference to the accompanying drawing, in which
Fig. 1 is a side view of an embodiment of a machine according to the invention,
Fig. 2 corresponds to Fig. 1, but where the coupling member includes a collecting compartment for corrugated cardboard blanks, and
Fig. 3 shows an embodiment of the machine where the coupling member includes a conveyor.

### Best Mode for Carrying Out the Invention

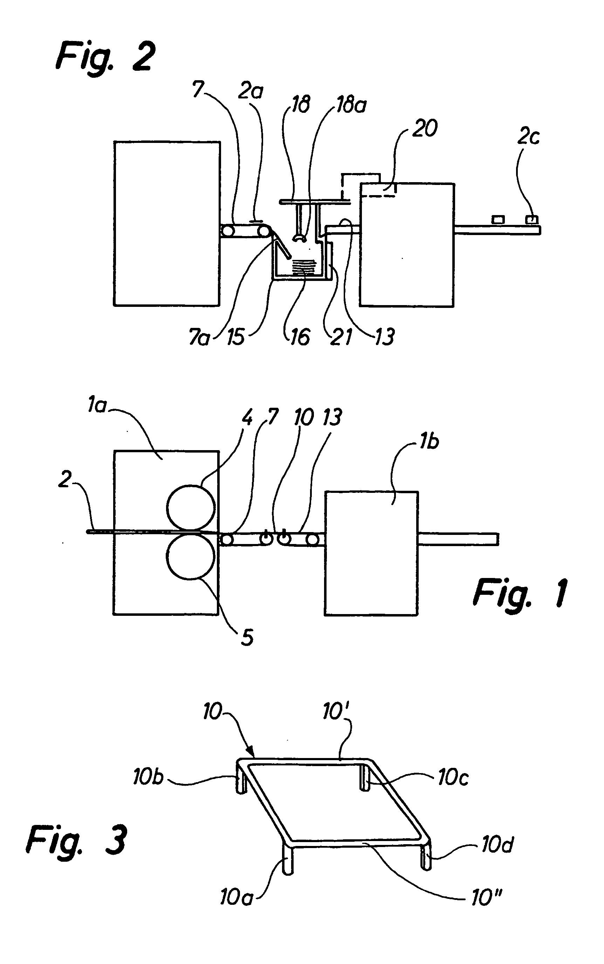

The machine of Fig. 1 includes two sections 1a and 1b. The machine section 1a is adapted to punch out and optionally slit corrugated cardboard blanks 2a from a web 2 of corrugated cardboard while simultaneously applying folding lines onto said corrugated cardboard blanks. The machine section 1a includes two interacting punching tools, such as for instance two interacting cylinders 4, 5, where punching, slitting and/or folding line tools not shown are mounted on said cylinders. These two interacting cylinders 4 and 5 can instead be a plane punch not shown including upper and lower tools for processing the web of corrugated cardboard blanks. A delivery unit 7 is mounted immediately after the two interacting cylinders 4, 5, viz. optionally the interacting upper and lower tools. The delivery unit 7 is in the present case formed by a conveyor belt, but it can be or include other members, such as a chute. The delivery unit 7 is adapted to be connected to the machine section 1b by means of a coupling member 10 provided with coupling means. The machine section 1b is formed by an erection module for erecting the plane corrugated cardboard blanks punched out and provided with folding lines in such a manner that said corrugated cardboard blanks is provided with a permanent or semipermanent three-dimensional shape. Then the resulting corrugated cardboard articles 2c can be filled with products for instance by means of a succeeding module. The machine section 1b, viz. the erection module, can be of any structure known per se provided it is capable in a reliable and fast manner of carrying and erecting the corrugated cardboard blanks arriving.

The coupling member 10 includes coupling means. Fig. 3 shows how these coupling means can be formed by hook members 10a, 10b, 10c and 10d, and the remaining coupling member can be formed by two parallel guide rails 10' and 10". In Fig. 1, the feeding end of the erection module is provided with an endless conveyor belt 13, and then the coupling member 10 interconnects the two conveyor belts 7 and 13, coupling eyes not shown being provided on the conveyor belt 13 and allowing the hook members 10a to 10d to interact.

Fig. 2 shows how the coupling member further can include a collecting compartment 15 for a temporary collecting of the corrugated cardboard blanks 2a arriving from the delivery unit 7. The collecting compartment can be shaped as an upwardly open box with preferably vertical, lateral guide rails not shown form the corrugated cardboard blanks. When the corrugated cardboard blanks re released from the machine section 1, the conveyor 7 carries said blanks to the right whereafter they slide, optionally via a chute, downwards into the collecting compartment 15, in which they form a stack 16. These stacked blanks can be moved further because the coupling member 15 also includes a transferring means 18 optionally equipped with a program controlling means, viz. a "communication means" 20 which is for instance secured to the erection module. This transferring means 18 is adapted to transfer one or more corrugated cardboard blanks at a time from the collecting compartment 15 to the feeding end 13 of the erection module 1b. The program controlling means renders it possible to set the transferring means 18 so as to very carefully feed corrugated cardboard blanks through said feeding end into the coupling member 1b at the exact speed which is the optimum operating speed of said coupling member 1b. In Fig. 2, the transferring means 18 is mounted directly on the collecting compartment. Several parts of the transferring means 18 can, however, also be mounted on the erection module 1b.

The transferring means 18 of the coupling member is usually adapted to lift/grip/push and move corrugated cardboard blanks from the delivery unit or the collecting compartment to the feeding end 13 of the erection module 1b, where the corrugated cardboard blanks in question is released/left so as to be fed into the erection module in another manner, such as by means of the feeding conveyor 13 shown in Fig. 13.

The transferring means of the coupling member is usually very easily movable. The free end 18a of the transferring means is usually provided with a gripping member, such as a pair of tongs or a member provided with one or more suction cups 18a. In connection with the release of each corrugated cardboard blank at the erection module, the transferring means 18a is adapted to position said blank in an advantageous manner at the feeding end 13 of said erection module 1b, optionally in such a manner that said blank forms a predetermined angle with said feeding end 13.

Fig. 2 shows how the collecting compartment 15 of the coupling member can form part of a level-controlling unit 21 controlling the height of the stack 16 of corrugated cardboard blanks temporarily placed in said collecting compartment 15.

The embodiment of the coupling member 10 shown in Fig. 3 is particular in allowing corrugated cardboard blanks delivered in or at the delivery unit 7 to slide directly onto the feeding end 13 of the erection module 1b in order to be further processed, such as folded, erected etc.

The invention may be modified in many ways without thereby deviating from the scope of the invention. Thus a light-sensitive contact not shown and an opposing light source can be arranged in connection with the transferring means 18 of the coupling member. These members serve to stop or activate the transferring means 18, said contact being activated when a corrugated cardboard blank 2a just punched out and approaching the transferring means refracts a light beam from the light source.

## Claims

1. A machine for punching out and optionally slitting corrugated cardboard blanks (2a) from a web (2) of corrugated cardboard while simultaneously applying folding lines onto said corrugated cardboard blanks, and where the machine includes two interacting punching tools, such as a plane punch provided with an upper and a lower tool or two interacting cylinders (4, 5), where said punching, slitting and folding line tools are mounted on said two interacting cylinders, **characterised in that** a delivery unit, such as a conveyor belt (7) or a chute (7a), is mounted immediately after the interacting upper and lower tools or the two interacting cylinders (4, 5), and that the delivery unit (7) is adapted to be connected to an erection module (1b) by means of a coupling member (10, 15), said erection module erecting the plane corrugated cardboard blanks punched out and provided with folding lines into a permanent or semipermanent three-dimensional shape in which the resulting corrugated cardboard articles are ready to be filled with products.

2. Machine according to claim 1, **characterised in that** the coupling member includes a collecting compartment (15) for a temporary collecting (16 of the corrugated cardboard blanks arriving from the delivery unit (7), said collecting compartment for instance being shaped as an upwardly open box with lateral guide rails.

3. Machine according to claim 1 or 2, **characterised in that** the coupling member (15) includes a transferring means (18,18a) optionally provided with a program controlling means (20), viz. a "communication means", for transferring one or more corrugated cardboard blanks at a time from the delivery unit (7) of the collecting compartment (15) to the feeding end (13) of the erection module (1b).

4. Machine according to claim 1, 2 or 3, **characterised in that** the transferring means (18a) of the coupling member is adapted to lift/grip/push and move corrugated cardboard blanks from the delivery unit (7) or the collecting compartment (15) to the feeding end (13) of the erection module, where said corrugated cardboard blanks are released/left.

5. Machine according to one or more of the claims 1 to 4, **characterised in that** the transferring means (18) of the coupling member is provided with a gripping member, such as a suction cup (18a) for instance at a free end thereof, and that a light-sensitive contact is optionally provided for activating said transferring means when a corrugated cardboard blank approaches said transferring means.

6. Machine according to one or more of the claims 1 to 5, **characterised in that** the transferring means (18a) of the coupling member is adapted to position the corrugated cardboard blank in a desired manner at the feeding end (13) of the erection module when said corrugated cardboard blank is released.

7. Machine according to one or more of the claims 1 to 6, **characterised in that** the collecting compartment of the coupling member includes a level-controlling unit (21) for controlling the height of the stack (16) of corrugated cardboard blanks placed temporarily in the collecting compartment (15).

8. Machine according to one or more of the claims 1 to 7, **characterised in that** the coupling member includes coupling means, such as hook members (10a, 10b, 10c, 10d), which are adapted to keep together the delivery unit (7) and the erection module (1b) as well as the guide rails (10', 10"), if any, optionally in a relatively tight relationship, said guide rails allowing the corrugated cardboard blanks delivered in or at the delivery unit (7) to slide directly or almost directly into the feeding end (13) of the erection module (1b).

## Patentansprüche

1. Maschine zum Ausstanzen und wahlweise Schneiden eines Wellpappzuschnitts (2a) aus einer Bahn (2) von Wellpappe, während gleichzeitig Faltlinien an dem Wellpappzuschnitt vorgesehen werden, und bei der die Maschine zwei zusammenwirkende Stanzwerkzeuge beinhaltet, wie beispielsweise eine flache Stanze die mit einem oberen und einem unteren Werkzeug oder zwei zusammen wirkenden Zylindern (4,5) versehen ist, wobei die Stanz-, Schneide- und Linienfaltwerkzeuge an den zwei zusammen wirkenden Zylindern angebracht sind,
**dadurch gekennzeichnet, dass**
eine Zuführungseinheit, wie beispielsweise ein Förderband (7) oder eine Rutsche (7a), direkt nach den zusammenwirkenden oberen und unteren Werkzeugen oder den beiden zusammenwirkenden Zylindern (4,5) angebracht ist, und dass die Zuführungseinheit (7) derart ausgestaltet ist, um mittels eines Verbindungselements (10,15) an ein Aufrichtmodul (1b) angeschlossen zu werden, und das Aufrichtmodul die ausgestanzten und mit Faltlinien versehenen, flachen Wellpappzuschnitte in eine andauernde oder halb andauernde dreidimensionale Gestalt aufrichtet, in der die sich ergebenden Wellpappartikel bereit sind mit Produkten gefüllt zu werden.

2. Maschine gemäß Anspruch 1 **dadurch gekennzeichnet, dass** das Verbindungselement ein Sammelfach (15) für ein vorübergehendes Sammeln (16) der von der Zuführungseinheit (7) ankommenden Wellpappzuschnitte beinhaltet, wobei das Sammelfach beispielsweise in der Gestalt eines nach oben offenen Behälters mit seitlichen Führungsschienen gestaltet ist.

3. Maschine gemäß Anspruch 1 oder 2 **dadurch gekennzeichnet, dass** das Verbindungselement (15) Übergabemittel (18, 18a) wahlweise mit Programmsteuermitteln (20), das heißt "Kommunikationsmittel", beinhaltet, um ein oder mehr Wellpappzuschnitte gleichzeitig von der Zuführungseinheit (7) des Sammelfachs (15) zum Versorgungsende (13) des Aufrichtmoduls (1b) zu übergeben.

4. Maschine gemäß Anspruch 1, 2, oder 3 **dadurch gekennzeichnet, dass** die Übergabemittel (18a) des Verbindungselements derart ausgestaltet sind um die Wellpappzuschnitte von der Zuführungseinheit (7) oder dem Sammelfach (15) zum Versorgungsende (13) des Aufrichtmoduls zu heben/greifen/schieben und zu bewegen, wo die Wellpappzuschnitte gelöst/ausgelassen werden.

5. Maschine gemäß einem oder mehreren der Ansprüche 1 bis 4 **dadurch gekennzeichnet, dass** die Übergabemittel (18) des Verbindungselements beispielsweise an einem freien Ende davon mit einem Griffelement versehen sind, wie beispielsweise einen Saugnapf (18a), und dass wahlweise ein lichtempfindlicher Kontakt vorgesehen ist, um die Übergabemittel zu aktivieren, sobald ein Wellpappzuschnitt die Übertragungsmittel erreicht.

6. Maschine gemäß einem oder mehrerer der Ansprüche 1 bis 5 **dadurch gekennzeichnet, dass** die Übergabemittel (18a) des Verbindungselements derart vorgesehen sind um den Wellpappzuschnitt in einer gewünschten Weise am Versorgungsende (13) des Aufrichtmoduls zu positionieren, sobald der Pappkartonzuschnitt gelöst wird.

7. Maschine gemäß einem oder mehrerer der Ansprüche 1 bis 6 **dadurch gekennzeichnet, dass** das Sammelfach des Verbindungselements eine ebene Steuereinheit (21) für die Steuerung der Höhe des Stapels (16) der Wellpappzuschnitte, die vorübergehend im Sammelfach (15) platziert sind, beinhaltet.

8. Maschine gemäß einem oder mehrerer der Ansprüche 1 bis 7 **dadurch gekennzeichnet, dass** das Verbindungselement Verbindungsmittel, wie Hakenelemente (10a, 10b, 10c, 10d) enthält, die vorgesehen sind um die Zuführungseinheit und das Aufrichtmodul (1b) und die Führungsschienen (10', 10") zusammenzuhalten, wenn eine Führungsschiene, wahlweise in einer ziemlich festen Beziehung, dem Wellpappzuschnitt, der in oder an der Zuführungseinheit (7) zugeführt wird, erlaubt, direkt oder beinahe direkt in das Versorgungsende (13) des Aufrichtmoduls (1b) zu gleiten.

## Revendications

1. Machine pour perforer et optionnellement couper des ébauches en carton ondulé (2a) d'un réseau (2) de carton ondulé tout en appliquant simultanément des lignes de pliure sur lesdites ébauches en carton ondulé, et où la machine comprend deux instruments de perforation interdépendants, tels qu'un perforateur plan muni d'un instrument supérieur et d'un instrument inférieur ou de deux cylindres interdépendants (4, 5), où lesdits instruments de perforation, de coupe et de lignes de pliure sont montés sur lesdits deux cylindres interdépendants, **caractérisée en ce qu'**une unité de distribution, telle qu'un transporteur à courroie (7) ou une goulotte (7a), est montée immédiatement après les instruments supérieur et inférieur interdépendants ou les deux cylindres interdépendants (4, 5), et **en ce que** l'unité de distribution (7) est adaptée pour être accouplée à un module de redressement (1b) au moyen d'un élément d'accouplement (10, 15), ledit module de redressement redressant les ébauches en carton ondulé planes perforées et munies de lignes de pliure à l'intérieur d'une forme tridimensionnelle permanente ou semi permanente dans laquelle les articles en carton ondulé résultants sont prêts à être remplis de produits.

2. Machine selon la revendication 1, **caractérisée en ce que** l'élément d'accouplement comprend un compartiment collecteur (15) pour une collecte temporaire (16) des ébauches en carton ondulé arrivant depuis l'unité de distribution (7), ledit compartiment collecteur étant par exemple présenté sous la forme d'une boîte ouverte vers le haut avec des rails de guidage latéraux.

3. Machine selon la revendication 1 ou 2, **caractérisée en ce que** l'élément d'accouplement (15) comprend un moyen de transfert (18, 18a) optionnellement muni d'un moyen de commande de programme (20), via un "moyen de communication", pour transférer une ou plusieurs ébauches en carton ondulé à un moment depuis l'unité de distribution (7) du compartiment collecteur (15) vers l'extrémité d'alimentation (13) du module de redressement (1b).

4. Machine selon la revendication 1, 2 ou 3, **caractérisée en ce que** le moyen de transfert (18a) de l'élément d'accouplement est adapté pour lever/saisir/pousser et déplacer les ébauches en carton ondulé depuis l'unité de distribution (7) ou le compartiment collecteur (15) vers l'extrémité d'alimentation (13) du module de redressement, où lesdites ébauches en carton ondulé sont libérées/laissées.

5. Machine selon une ou plusieurs des revendications 1 à 4, **caractérisée en ce que** le moyen de transfert (18) de l'élément d'accouplement est muni d'un élément de saisie, tel qu'une ventouse (18a) par exemple au niveau d'une extrémité libre de celui-ci, et **en ce qu'**un contact sensible à la lumière est optionnellement fourni pour activer ledit moyen de transfert lorsqu'une ébauche en carton ondulé s'approche dudit moyen de transfert.

6. Machine selon une ou plusieurs des revendications 1 à 5, **caractérisée en ce que** le moyen de transfert (18a) de l'élément d'accouplement est adapté pour positionner l'ébauche en carton ondulé d'une manière souhaitée au niveau de l'extrémité d'alimentation (13) du module de redressement lorsque ladite ébauche en carton ondulé est libérée.

7. Machine selon une ou plusieurs des revendications 1 à 6, **caractérisée en ce que** dans le compartiment collecteur de l'élément d'accouplement comprend une unité de commande de niveau (21) pour commander la hauteur de la pile (16) des ébauches en carton ondulé placées temporairement dans le compartiment collecteur (15).

8. Machine selon une ou plusieurs des revendications 1 à 7, **caractérisée en ce que** l'élément d'accouplement comprend des moyens d'accouplement, tel que des éléments de crochet (10a, 10b, 10c, 10d), qui sont adaptés pour maintenir ensemble l'unité de distribution (7) et le module de redressement (1b) ainsi que les rails de guidage (10', 10"), le cas échéant, optionnellement dans une relation relativement serrée, lesdits rails de guidage permettant aux ébauches en carton ondulé distribuées dans ou au niveau de l'unité de distribution (7) de glisser directement ou presque directement à l'intérieur de l'extrémité d'alimentation (13) du module de redressement (1b).
